# DEMANDE DE BREVET EUROPEEN

(11) **EP 4 691 884 A1**
(43) Date de publication de la demande: **11.02.2026**
(21) Numéro de dépôt: 25193621.7
(22) Date de dépôt: 04.08.2025
(51) Int. Cl.: B62D 15/02, B60W 30/06, G01M 17/007

(54) **TAPIS, SYSTÈME ET PROCÉDÉ POUR LA VALIDATION D'UNE FONCTION DE STATIONNEMENT AUTONOME**

(30) Priorité: 08.08.2024 FR 2408796
(71) Demandeur: Ampere SAS, 92100 Boulogne-Billancourt (FR)
(72) Inventeur: AMBROISE, Stéphanie, 78288 Guyancourt Cedex (FR)
(74) Mandataire: Renault Group

(57) **Abrégé**

Un aspect de l'invention concerne un tapis (100) pour la validation d'une fonction de stationnement autonome implémentée sur un véhicule (301) permettant au véhicule (301) de se garer de manière autonome sur une place de stationnement (300), le tapis (100) comprenant une pluralité de premiers marquages (101) s'intersectant en un premier point (P), chaque premier marquage (101) comprenant une première ligne (1011) et une deuxième ligne (1012) s'intersectant audit premier point (P), la deuxième ligne (1012) étant perpendiculaire à la première ligne (1011), chaque premier marquage (101) étant décalé d'un angle prédéfini par rapport à un premier marquage de référence (1010) parmi la pluralité de premiers marquages (101).

## Description

### DOMAINE TECHNIQUE DE L'INVENTION

Le domaine technique de l'invention est celui des véhicules équipés d'une fonction de stationnement autonome, et plus particulièrement celui de la validation d'une telle fonction.

La présente invention concerne un tapis pour la validation d'une fonction de stationnement autonome, et plus particulièrement un tapis pour la validation d'une fonction de stationnement autonome implémentée sur un véhicule. La présente invention concerne également un système et un procédé pour la validation d'une fonction de stationnement autonome.

### ARRIERE-PLAN TECHNOLOGIQUE DE L'INVENTION

La fonction de stationnement autonome ou Remote Parking (RPK) en anglais, est une prestation permettant au conducteur de garer un véhicule sur une place de stationnement située par exemple dans un garage ou entre deux autres véhicules, en étant à l'extérieur du véhicule et à l'aide d'un objet connecté, tel qu'un smartphone. Cette fonction est particulièrement avantageuse lorsque la largeur de la place est faible et ne permet pas aux occupants du véhicule d'ouvrir suffisamment les portes pour pouvoir sortir du véhicule une fois celui-ci garé.

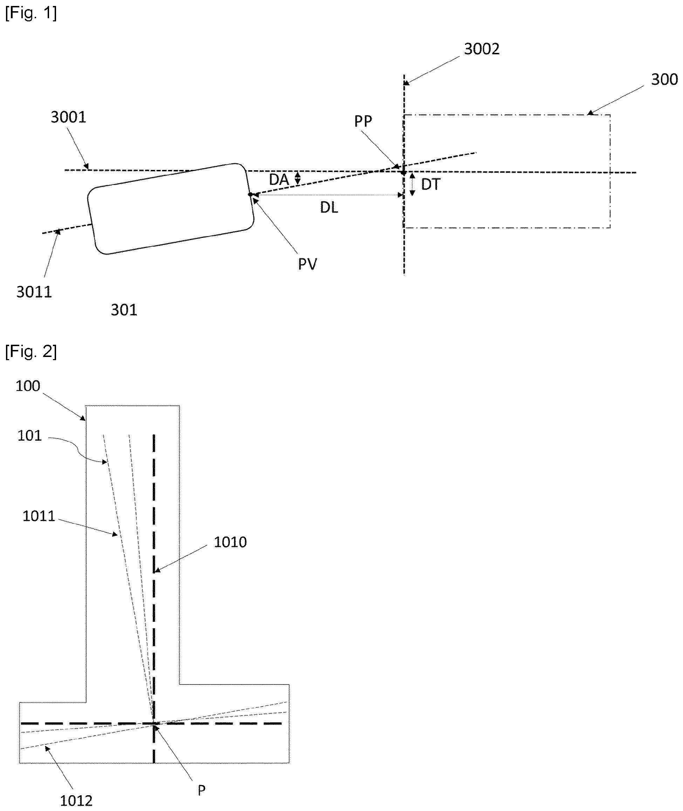

Pour que la manœuvre de stationnement autonome réussisse, il est indispensable que le véhicule soit bien positionné devant la place de stationnement. Pour cela, des préconisations concernant certains paramètres de positionnement du véhicule sont données par les fournisseurs. Comme illustré sur la figure 1, les paramètres de positionnement sont par exemple un décalage angulaire DA entre un axe longitudinal du véhicule 3011 passant par le milieu du véhicule 301 et un axe longitudinal principal 3001 de la place de stationnement 300 passant par le milieu de la place de stationnement 300, un décalage longitudinal DL et un décalage transversal DT entre un point PV du véhicule 301 situé sur l'axe longitudinal du véhicule 3011 et le plus proche de la place de stationnement 300 et un point PP de la place de stationnement 300 situé sur l'axe longitudinal principal 3001 de la place de stationnement 300 et le plus proche du véhicule 301.

Pour garantir que la fonction de stationnement autonome se comporte comme souhaité quand le véhicule est positionné en respectant les préconisations, il est nécessaire de tester et valider la fonction de stationnement autonome.

### RESUME DE L'INVENTION

L'invention offre une solution aux problèmes évoqués précédemment, en proposant un système et un procédé permettant la validation d'une fonction de stationnement autonome.

Un premier aspect de l'invention concerne un tapis pour la validation d'une fonction de stationnement autonome implémentée sur un véhicule permettant au véhicule de se garer de manière autonome sur une place de stationnement, le tapis comprenant une pluralité de premiers marquages s'intersectant en un premier point, chaque premier marquage comprenant une première ligne et une deuxième ligne s'intersectant audit premier point, la deuxième ligne étant perpendiculaire à la première ligne, chaque premier marquage étant décalé d'un angle prédéfini par rapport à un premier marquage de référence parmi la pluralité de premiers marquages.

Grâce à l'invention, il est possible de tester facilement la fonction de stationnement autonome pour plusieurs valeurs de décalages angulaires, de décalages longitudinaux et de décalages transversaux, entre le véhicule et la place de stationnement. Pour cela, le tapis est positionné en fonction des valeurs de décalage longitudinal et transversal souhaitées à l'aide du premier marquage de référence correspondant à un décalage angulaire nul, puis le véhicule est positionné sur le tapis selon la valeur de décalage angulaire souhaitée grâce au premier marquage correspondant.

Outre les caractéristiques qui viennent d'être évoquées dans le paragraphe précédent, le tapis selon l'invention peut présenter une ou plusieurs caractéristiques complémentaires parmi les suivantes, considérées individuellement ou selon toutes les combinaisons techniquement possibles.

Selon une variante de réalisation, le tapis selon l'invention est constitué d'une pluralité de dalles amovibles liées entre elles.

Ainsi, le positionnement et le déplacement du tapis sont facilités.

Selon une variante de réalisation compatible avec la variante de réalisation précédente, chaque premier marquage est réalisé dans une couleur différente

Ainsi, le positionnement du véhicule sur le tapis à l'aide de la vue aérienne du véhicule est facilité.

Un deuxième aspect de l'invention concerne un système pour la validation d'une fonction de stationnement autonome implémentée sur un véhicule permettant au véhicule de se garer de manière autonome sur une place de stationnement, le système comportant :
- un tapis selon l'invention ;
- devant la place de stationnement, une pluralité de deuxièmes marquages longitudinaux et une pluralité de deuxièmes marquages transversaux perpendiculaires à la pluralité de deuxièmes marquages longitudinaux, chaque deuxième marquage longitudinal étant séparé par une distance transversale prédéfinie d'un deuxième marquage longitudinal de référence parmi la pluralité de deuxièmes marquages longitudinaux, et chaque deuxième marquage transversal étant séparé par une distance longitudinale prédéfinie d'un deuxième marquage transversal de référence parmi la pluralité de deuxièmes marquages transversaux.

Ainsi, le positionnement du tapis est réalisé à l'aide du premier marquage de référence et des deuxièmes marquages longitudinal et transversal correspondant aux valeurs de décalages longitudinal et transversal souhaitées.

Selon une variante de réalisation, le système selon l'invention comporte un système de réglage de la largeur et de la longueur de la place de stationnement.

Ainsi, il est possible de tester les performances de la fonction de stationnement autonome pour plusieurs dimensionnements de la place de stationnement.

Selon une sous-variante de réalisation de la variante de réalisation précédente, le système de réglage comporte :
- un hangar dans lequel est située la place de stationnement ;
- sur le sol du hangar, une pluralité de troisièmes marquages longitudinaux et une pluralité de troisièmes marquages transversaux perpendiculaires à la pluralité de troisièmes marquages longitudinaux, chaque troisième marquage longitudinal étant séparé de chaque autre troisième marquage longitudinal par une distance prédéfinie, et chaque troisième marquage transversal étant séparé de chaque autre troisième marquage transversal par une distance prédéfinie ;
le hangar comprenant des moyens de réglage de sa longueur et de sa largeur à l'aide de la pluralité de troisièmes marquages longitudinaux et transversaux.

Ainsi, le réglage des dimensions de la place peut être facilement réalisé à l'aide des troisièmes marquages longitudinal et transversal correspondant aux longueur et largeur souhaitées.

Un troisième aspect de l'invention concerne un procédé de validation d'une fonction de stationnement autonome implémentée sur un véhicule permettant au véhicule de se garer de manière autonome sur une place de stationnement, la validation étant réalisée pour un décalage angulaire donné par rapport à un axe longitudinal principal passant par le milieu de la place et pour un décalage longitudinal et un décalage transversal donnés par rapport à un point de la place situé sur l'axe longitudinal principal et le plus proche du véhicule avant stationnement, le véhicule comportant des moyens de calcul et de restitution d'une vue aérienne du véhicule, le procédé étant réalisé à l'aide du système selon l'invention, et comportant les étapes suivantes :
- Positionnement du tapis devant la place de stationnement à l'aide du premier marquage de référence et des deuxièmes marquages longitudinal et transversal correspondant aux décalages longitudinal et transversal donnés ;
- Positionnement du véhicule sur le tapis à l'aide de la vue aérienne du véhicule et du premier marquage correspondant au décalage angulaire donné.

Selon une variante de réalisation, un axe longitudinal du véhicule passant par le milieu du véhicule et un axe transversal du véhicule passant par l'avant ou l'arrière du véhicule sont implémentés sur la vue aérienne et le positionnement du véhicule est réalisé en alignant l'axe longitudinal du véhicule sur la première ligne, et l'axe transversal du véhicule sur la deuxième ligne du premier marquage correspondant au décalage angulaire donné.

Selon une variante de réalisation compatible avec la variante de réalisation précédente, le procédé selon l'invention comporte en outre une étape de déclenchement de la fonction de stationnement autonome une fois le véhicule positionné sur le tapis.

Selon une variante de réalisation compatible avec les variantes de réalisation précédentes, le procédé selon l'invention comporte une étape de réglage de la largeur et de la longueur de la place de stationnement préalablement à l'étape de déclenchement.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 illustre un ensemble de paramètres de positionnement d'un véhicule ayant une influence sur le succès d'une manœuvre de stationnement autonome sur une place de stationnement.
- La figure 2 montre une représentation schématique d'un tapis selon l'invention.
- La figure 3 montre une représentation schématique d'un système selon l'invention, avant le positionnement du tapis selon l'invention.
- La figure 4 montre une représentation schématique d'un hangar selon un mode de réalisation de l'invention.
- La figure 5 est un schéma synoptique illustrant l'enchaînement des étapes d'un procédé selon l'invention.
- La figure 6 montre une représentation schématique d'une étape de positionnement du tapis du procédé selon l'invention.
- La figure 7 montre une représentation schématique d'une étape de positionnement du véhicule du procédé selon l'invention.

### DESCRIPTION DETAILLEE

Sauf précision contraire, un même élément apparaissant sur des figures différentes présente une référence unique.

Un premier aspect de l'invention concerne un tapis destiné à la validation d'une fonction de stationnement autonome implémentée sur un véhicule.

La fonction de stationnement autonome permet au conducteur de garer son véhicule sur une place de stationnement en étant à l'extérieur du véhicule, sans avoir à faire lui-même la manœuvre de stationnement.

Une fois le véhicule positionné devant la place de stationnement, la fonction de stationnement autonome est déclenchée par le conducteur à l'aide d'un objet connecté, par exemple un smartphone ou une tablette, et le véhicule se gare de manière autonome sur la place de stationnement.

La validation de la fonction de stationnement autonome a pour objectif de vérifier que quand le véhicule est positionné en respectant les paramètres de positionnement préconisés par les fournisseurs, la manœuvre de stationnement autonome est un succès, c'est-à-dire que le véhicule réussit à se garer de manière autonome sur la place de stationnement sans rentrer en collision avec un quelconque obstacle.

Comme précédemment décrit en référence à l'art antérieur et visible sur la figure 1, les paramètres de positionnement sont par exemple un décalage angulaire DA, un décalage longitudinal DL et un décalage transversal DT entre le véhicule 301 et la place de stationnement 300.

On entend par « longitudinal », qui est pris dans le sens de la longueur par rapport à un référentiel donné, et par « transversal », qui est pris dans la sens de la largeur par rapport au référentiel donné et donc perpendiculaire à longitudinal. Dans la suite de la description et sauf mention contraire, le référentiel considéré est celui de la place de stationnement 300 et tout ce qui est qualifié de longitudinal est donc selon la longueur de la place de stationnement 300 et tout ce qui est qualifié de transversal DT selon la largeur de la place de stationnement 300.

Comme illustré sur la figure 2, le tapis 100 selon l'invention comprend une première surface destinée à être en contact avec le sol et une deuxième surface opposée à la première surface, qui comporte une pluralité de marquages, qualifiés par la suite de premiers marquages 101.

Chaque premier marquage 101 comporte une première ligne 1011 et une deuxième ligne 1012 s'intersectant en un point, qualifié par la suite de premier point P, de manière que la première ligne 1011 soit sensiblement perpendiculaire à la deuxième ligne 1012. Chaque premier marquage 101 peut donc être vu comme une croix, dont les branches sont sensiblement perpendiculaires.

Tous les premiers marquages 101 de la pluralité de premiers marquages 101 s'intersectent au premier point P et chaque premier marquage 101 est décalé d'un angle prédéfini par rapport à un premier marquage de référence 1010, choisi parmi la pluralité de premiers marquages 101 pour correspondre à un angle nul.

Sur la figure 2, le tapis 100 comporte trois premiers marquages 101, un premier premier marquage 101 séparé d'un premier angle par rapport au premier marquage de référence 1010, et un deuxième premier marquage 101 séparé d'un deuxième angle par rapport au premier marquage de référence 1010, la valeur du deuxième angle étant supérieure à la valeur du premier angle.

Le premier angle est par exemple de 5° et le deuxième angle de 10°.

Alternativement, la pluralité de premiers marquages 101 est positionnée de manière à couvrir une plage angulaire allant de -60° à 60° par rapport au premier marquage de référence 1010, avec un écart angulaire de 5° entre deux premiers marquages 101 successifs.

Selon un exemple de réalisation, chaque premier marquage 101 est réalisé dans une couleur différente de celles des autres premiers marquages 101 de la pluralité de premiers marquages 101, par exemple le premier marquage de référence 1010 est réalisé en rouge, le premier premier marquage 101 en vert et le deuxième premier marquage 101 en bleu.

Selon un mode de réalisation, la première surface du tapis 100 comporte les mêmes premiers marquages 101 que la deuxième surface du tapis 100 et le tapis 100 est donc réversible.

Selon un mode de réalisation, le tapis 100 est constitué d'une pluralité de dalles amovibles liées entre elles.

Chaque dalle a par exemple une dimension de 50 cm sur 50 cm et est réalisée en PVC antidérapant.

Chaque dalle peut par exemple être emboitée avec une ou plusieurs autres dalles, comme un puzzle.

Un deuxième aspect de l'invention concerne un système destiné à la validation d'une fonction de stationnement autonome implémentée sur un véhicule, comportant le tapis 100 selon l'invention.

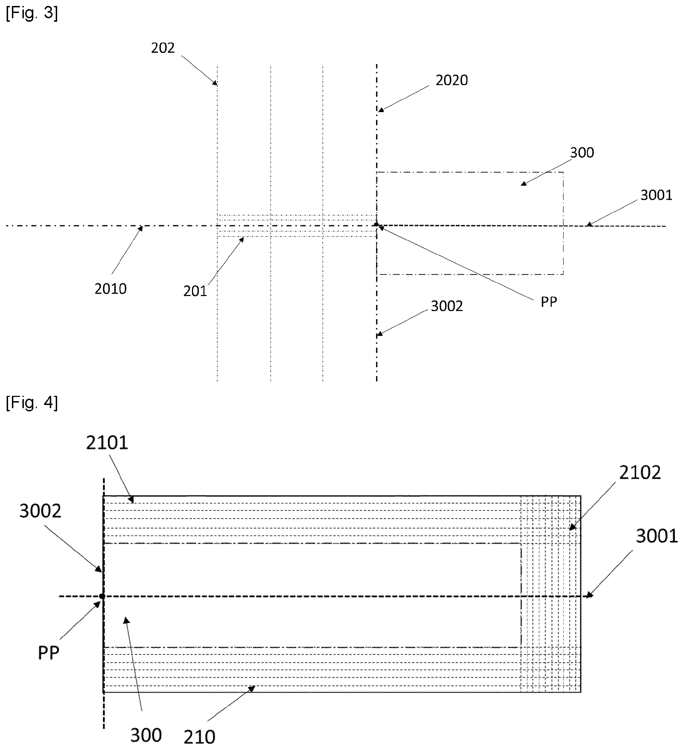

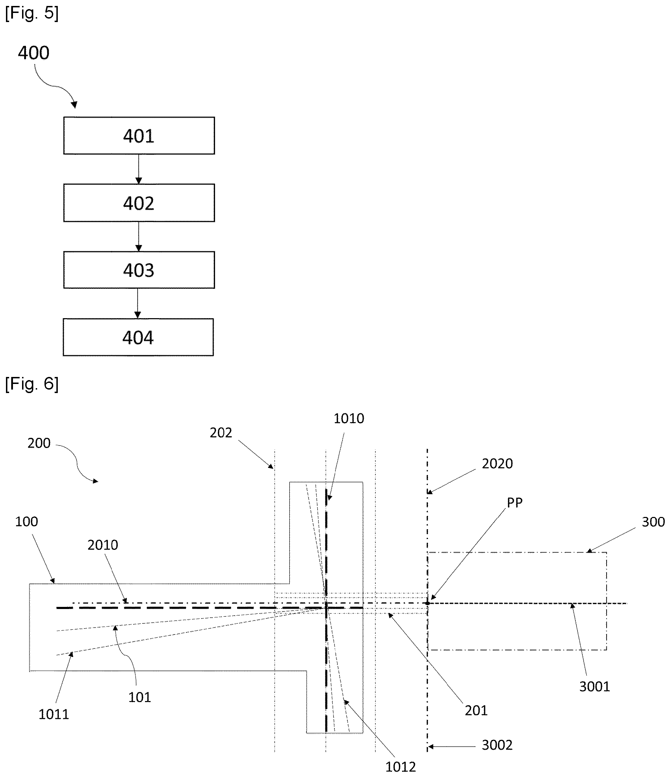

Comme illustré sur les figures 3 et 6, le système 200 comporte une pluralité de marquages longitudinaux, qualifiés par la suite de deuxièmes marquages longitudinaux 201, et une pluralité de marquages transversaux, qualifiés par la suite de deuxièmes marquages transversaux 202, situés devant la place de stationnement 300.

Chaque deuxième marquage longitudinal 201 est séparé par une distance transversale prédéfinie d'un deuxième marquage longitudinal de référence 2010 choisi parmi la pluralité de deuxièmes marquages longitudinaux 201.

Comme illustré sur les figures 3 et 6, le deuxième marquage longitudinal de référence 2010 est par exemple situé sur un axe longitudinal principal 3001 de la place de stationnement 300 passant par le milieu de la place de stationnement 300, et correspond ainsi à un décalage longitudinal DL nul.

Sur les figures 3 et 6, le système 200 comporte quatre deuxièmes marquages longitudinaux 201, un premier deuxième marquage longitudinal 201 séparé du deuxième marquage longitudinal de référence 2010 par une première distance transversale, un deuxième deuxième marquage longitudinal 201 séparé du deuxième marquage longitudinal de référence 2010 par une deuxième distance transversale et un troisième deuxième marquage longitudinal 201 séparé du deuxième marquage longitudinal de référence 2010 par une troisième distance transversale.

La première distance transversale est par exemple de 1 m, la deuxième distance transversale de 2 m et la troisième distance transversale de 3 m.

Alternativement, la pluralité de deuxièmes marquages longitudinaux 201 est positionné de manière à couvrir une distance transversale de 10 m par rapport au deuxième marquage longitudinal de référence 2010, avec un écart transversal de 1 m entre deux deuxièmes marquages longitudinaux 201 successifs.

Chaque deuxième marquage transversal 202 est séparé par une distance longitudinale prédéfinie d'un deuxième marquage transversal de référence 2020 choisi parmi la pluralité de deuxièmes marquages transversaux 202.

Comme illustré sur les figures 3 et 6, le deuxième marquage transversal de référence 2020 est par exemple situé sur un axe transversal antérieur 3002 de la place de stationnement 300 passant un point PP de la place de stationnement 300 situé sur l'axe longitudinal principal 3001 de la place de stationnement 300 et le plus proche du véhicule 301 avant stationnement. Le deuxième marquage transversal de référence 2020 correspond alors à un décalage transversal DT nul.

Sur les figures 3 et 6, le système 200 comporte cinq deuxièmes marquages transversaux 202, un premier deuxième marquage transversal 202 séparé du deuxième marquage longitudinal de référence 2020 par une première distance longitudinale, un deuxième deuxième marquage transversal 202 séparé du deuxième marquage longitudinal de référence 2020 par une deuxième distance longitudinale, un troisième deuxième marquage transversal 202 séparé du deuxième marquage longitudinal de référence 2020 par une troisième distance longitudinale et un quatrième deuxième marquage transversal 202 séparé du deuxième marquage longitudinal de référence 2020 par une quatrième distance longitudinale.

La première distance longitudinale est par exemple de -0,2 m, la deuxième distance longitudinale de -0,1 m, la troisième distance longitudinale de 0,1 m et la quatrième distance longitudinale de 0,2 m.

Alternativement, la pluralité de deuxièmes marquages transversaux 202 est positionné de manière à couvrir une distance longitudinale allant de -1 m à 1 m par rapport au deuxième marquage transversal de référence 2020, avec un écart longitudinal de 10 cm entre deux deuxièmes marquages transversaux 202 successifs.

Selon un mode de réalisation, le système 200 selon l'invention comporte un système de réglage permettant de régler la largeur et de la longueur de la place de stationnement 300.

Selon un exemple de réalisation illustré sur la figure 4, le système de réglage comporte un hangar 210 comprenant des moyens de réglage de la longueur du hangar 210 et de la largeur du hangar 210, une pluralité de marquages longitudinaux, qualifiés par la suite de troisièmes marquages longitudinaux 2101, et une pluralité de marquages transversaux, qualifiés par la suite de troisièmes marquages transversaux 2102, situés sur le sol du hangar 210. La place de stationnement 300 est situé dans le hangar 210.

Chaque troisième marquage longitudinal 2101 est séparé par une distance transversale prédéfinie de chaque autre troisième marquage longitudinal 2101 de la pluralité de troisièmes marquages longitudinaux 2101, et chaque troisième marquage transversal 2102 est séparé par une distance longitudinale prédéfinie de chaque autre troisième marquage transversal 2102 de la pluralité de troisièmes marquages transversaux 2102.

Sur la figure 4, le système de réglage comporte douze troisièmes marquages longitudinaux 2101, séparés respectivement d'une distance transversale de -1,3 m, -1,25 m, -1,2 m, -1,15 m, -1,1 m, -1,05 m, 1,05 m, 1,1 m, 1,15 m, 1,2 m, 1,25 m et 1,3 m de l'axe longitudinal principal 3001 et dix troisièmes marquages transversaux 2102, séparés respectivement d'une distance longitudinale de 5 m, 5,1 m, 5,2 m, 5,3 m, 5,4 m, 5,5 m, 5,6 m, 5,7 m, 5,8 m et 5,9 m de l'axe transversal antérieur 3002.

Selon un exemple de réalisation, chaque troisième marquage longitudinal 2101 est réalisé dans la même couleur que le troisième marquage longitudinal 2101 qui est son symétrique par rapport à l'axe longitudinal principal 3001 et dans une couleur différente de celles des autres troisièmes marquages longitudinaux 2101 de la pluralité de troisièmes marquages longitudinaux 2101.

Selon un exemple de réalisation, chaque troisième marquage transversal 2102 est réalisé dans une couleur différente de celles des autres troisièmes marquages transversaux 2102 de la pluralité de troisièmes marquages transversaux 2102.

Les moyens de réglage de la longueur du hangar 210 et de la largeur du hangar 210 sont par exemple des panneaux mobiles posés chacun sur un socle pouvant être déplacés et alignés sur le troisième marquage longitudinal 2101 ou le troisième marquage transversal 2102 correspondant à la longueur ou la largeur souhaitée.

Les panneaux sont par exemple en bois ou en polystyrène extrudé.

Un troisième aspect de l'invention concerne un procédé 400 de validation d'une fonction de stationnement autonome implémentée sur un véhicule 301, dont l'enchaînement des étapes est illustré sur la figure 5. Le procédé 400 est réalisé à l'aide du système 200 selon l'invention.

La validation est réalisée pour un jeu de paramètres de positionnement donné, à savoir un décalage angulaire DA, un décalage longitudinal DL et un décalage transversal DT donnés.

Le procédé 400 selon l'invention peut comporter une première étape 401 de réglage de la largeur et de la longueur de la place de stationnement 300 à l'aide du système de réglage du système 200 selon l'invention.

Alternativement, la première étape 401 peut être réalisée après une deuxième étape 402 ou après une troisième étape 403 du procédé 400.

La deuxième étape 402 du procédé 400 consiste à positionner le tapis 100 devant la place de stationnement 300.

Pour cela, la première ligne 101 du premier marquage de référence 1010 est par exemple alignée avec le deuxième marquage longitudinal 201 correspondant au décalage longitudinal DL et la deuxième ligne 102 du premier marquage de référence 1010 est par exemple alignée avec le deuxième marquage transversal 202 correspondant au décalage transversal DT.

Sur la figure 6, le tapis 100 est positionné de manière à être aligné avec le deuxième deuxième marquage longitudinal 201 et le deuxième deuxième marquage transversal 202.

La troisième étape 403 du procédé 400 consiste à positionner le véhicule 301 à garer sur le tapis 100 préalablement positionné.

Le véhicule 301 comporte des moyens de calcul et de restitution d'une vue aérienne du véhicule 301 ou « bird eye view » en anglais.

Sur la vue aérienne du véhicule 301, sont implémentés un axe longitudinal du véhicule 3011 passant par le milieu du véhicule 301 et un axe transversal du véhicule 3012 passant par l'avant ou l'arrière du véhicule 301 selon que la manœuvre de stationnement soit réalisée en marche avant ou en marche arrière.

La troisième étape 403 consiste par exemple à utiliser la vue aérienne du véhicule 301 pour aligner l'axe longitudinal du véhicule 3011 et la première ligne 1011 du premier marquage 101 correspondant au décalage angulaire DA donné, et l'axe transversal du véhicule 3012 sur la deuxième ligne 1012 du premier marquage 101 correspondant au décalage angulaire DA donné.

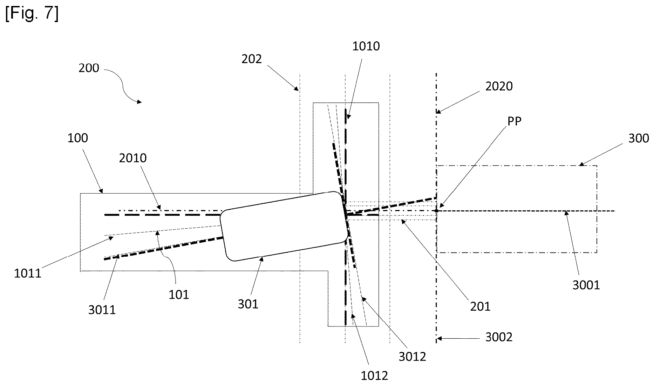

Sur la figure 7, le véhicule 301 est positionné sur le deuxième premier marquage 101.

Une quatrième étape 404 du procédé 400 consiste à déclencher la fonction de stationnement autonome une fois le véhicule 301 positionné selon le jeu de paramètres de positionnement souhaité.

La quatrième étape 404 est par exemple réalisée à l'aide d'un objet connecté, tel qu'un smartphone ou une tablette.

## Revendications

1. Tapis (100) pour la validation d'une fonction de stationnement autonome implémentée sur un véhicule (301) permettant au véhicule (301) de se garer de manière autonome sur une place de stationnement (300), le tapis (100) comprenant une pluralité de premiers marquages (101) s'intersectant en un premier point (P), chaque premier marquage (101) comprenant une première ligne (1011) et une deuxième ligne (1012) s'intersectant audit premier point (P), la deuxième ligne (1012) étant perpendiculaire à la première ligne (1011), chaque premier marquage (101) étant décalé d'un angle prédéfini par rapport à un premier marquage de référence (1010) parmi la pluralité de premiers marquages (101).

2. Tapis (100) selon la revendication 1, constitué d'une pluralité de dalles amovibles liées entre elles.

3. Tapis (100) selon l'une quelconque des revendications précédentes, dans lequel chaque premier marquage (101) est réalisé dans une couleur différente.

4. Système (200) pour la validation d'une fonction de stationnement autonome implémentée sur un véhicule (301) permettant au véhicule (301) de se garer de manière autonome sur une place de stationnement (300), le système (200) comportant :
- un tapis (100) selon l'une quelconque des revendications précédentes ;
- devant la place de stationnement (300), une pluralité de deuxièmes marquages longitudinaux (201) et une pluralité de deuxièmes marquages transversaux (202) perpendiculaires à la pluralité de deuxièmes marquages longitudinaux (201), chaque deuxième marquage longitudinal (201) étant séparé par une distance transversale prédéfinie d'un deuxième marquage longitudinal de référence (2010) parmi la pluralité de deuxièmes marquages longitudinaux (201), et chaque deuxième marquage transversal (202) étant séparé par une distance longitudinale prédéfinie d'un deuxième marquage transversal de référence (2020) parmi la pluralité de deuxièmes marquages transversaux (202).

5. Système (200) selon la revendication 4, comportant un système de réglage de la largeur et de la longueur de la place de stationnement (300).

6. Système (200) selon la revendication 5, dans lequel le système de réglage comporte :
- un hangar (210) dans lequel est située la place de stationnement (300) ;
- sur le sol du hangar (210), une pluralité de troisièmes marquages longitudinaux (2101) et une pluralité de troisièmes marquages transversaux (2102) perpendiculaires à la pluralité de troisièmes marquages longitudinaux (2101), chaque troisième marquage longitudinal (2101) étant séparé de chaque autre troisième marquage longitudinal (2101) par une distance prédéfinie, et chaque troisième marquage transversal (2102) étant séparé de chaque autre troisième marquage transversal (2102) par une distance prédéfinie ;
le hangar (210) comprenant des moyens de réglage de sa longueur et de sa largeur à l'aide de la pluralité de troisièmes marquages longitudinaux (2101) et transversaux (2102).

7. Procédé (400) de validation d'une fonction de stationnement autonome implémentée sur un véhicule (301) permettant au véhicule (301) de se garer de manière autonome sur une place de stationnement (300), la validation étant réalisée pour un décalage angulaire (DA) donné par rapport à un axe longitudinal principal (3001) passant par le milieu de la place (300) et pour un décalage longitudinal (DL) et un décalage transversal (DT) donnés par rapport à un point (PP) de la place (300) situé sur l'axe longitudinal principal (3001) et le plus proche du véhicule (301) avant stationnement, le véhicule (301) comportant des moyens de calcul et de restitution d'une vue aérienne du véhicule (301), le procédé (400) étant réalisé à l'aide du système (200) selon l'une quelconque des revendications 4 à 6, et comportant les étapes suivantes :
- Positionnement du tapis (100, 402) devant la place de stationnement (300) à l'aide du premier marquage de référence (1010) et des deuxièmes marquages longitudinal (201) et transversal (202) correspondant aux décalages longitudinal (DL) et transversal (DT) donnés ;
- Positionnement du véhicule (301, 403) sur le tapis (100) à l'aide de la vue aérienne du véhicule (301) et du premier marquage (101) correspondant au décalage angulaire (DA) donné.

8. Procédé (400) selon la revendication 7, dans lequel un axe longitudinal du véhicule (3011) passant par le milieu du véhicule (301) et un axe transversal du véhicule (3012) passant par l'avant ou l'arrière du véhicule (301) sont implémentés sur la vue aérienne et le positionnement du véhicule (301) est réalisé en alignant l'axe longitudinal du véhicule (3011) sur la première ligne (1011), et l'axe transversal du véhicule (3012) sur la deuxième ligne (1012) du premier marquage (101) correspondant au décalage angulaire (DA) donné.

9. Procédé (400) selon l'une quelconque des revendications 7 ou 8, comportant en outre une étape de déclenchement (404) de la fonction de stationnement autonome une fois le véhicule (301) positionné sur le tapis (100).

10. Procédé (400) selon l'une quelconque des revendications 7 à 9, comportant une étape de réglage (401) de la largeur et de la longueur de la place de stationnement (300) préalablement à l'étape de déclenchement (404).
